# FASCICULE DE BREVET EUROPEEN

(11) **EP 2 310 787 B1**
(45) Date de publication et mention de la délivrance du brevet: **01.05.2013**
(21) Numéro de dépôt: 09769212.3
(22) Date de dépôt: 22.06.2009
(51) Int. Cl.: F28F 9/00, F28D 9/00

(54) **ECHANGEUR DE CHALEUR COMPORTANT UN FAISCEAU D'ECHANGE DE CHALEUR ET UN BOITIER**
WÄRMETAUSCHER MIT EINEM WÄRMETAUSCHERBÜNDEL UND EINEM GEHÄUSE
HEAT EXCHANGER COMPRISING A HEAT EXCHANGER BUNDLE AND A HOUSING

(30) Priorité: 26.06.2008 FR 0803598
(43) Date de publication de la demande: 20.04.2011
(73) Titulaire: VALEO SYSTEMES THERMIQUES, 78320 Le Mesnil Saint-Denis (FR)
(72) Inventeur: GARRET, Paul, F-51100 Reims (FR); FAILLE, Philippe, F-51100 Reims (FR)
(74) Mandataire: Metz, Gaëlle
(86) Numéro de dépôt international: PCT/EP2009/057740
(87) Numéro de publication internationale: WO 2009/156363

(56) Documents cités:
- WO-A-2004/065874
- FR-A- 2 814 537
- JP-A- 2000 304 486
- US-A1- 2005 189 097
- US-A1- 2006 219 394

## Description

L'invention concerne le domaine des échangeurs de chaleur, notamment pour véhicules automobiles.

Elle concerne plus particulièrement un échangeur de chaleur selon le préambule de la revendication 1. Un tel échangeur est connu du document WO 2004 065874.

Ce type d'échangeur est notamment utilisé en tant que refroidisseur d'air de suralimentation d'un moteur thermique de véhicule automobile.

Dans ce cas, le gaz à refroidir est l'air de suralimentation (ou un mélange d'air de suralimentation et de gaz d'échappement recirculés). Après avoir traversé l'échangeur de chaleur, l'air est admis dans le moteur thermique au travers d'un répartiteur d'air.

Un tel échangeur de chaleur est connu notamment du document DE 199 02 504. Ce document propose un échangeur de chaleur dans lequel l'air de suralimentation est refroidi par un fluide caloporteur qui, dans ce cas, est du liquide de refroidissement, c'est à dire de l'eau additionnée de glycol provenant d'un circuit dit basse température de véhicule automobile.

Cet échangeur comporte un faisceau d'échange de chaleur logé dans un boîtier plastique fermé par un couvercle. Cette solution facilite l'intégration des boîtiers d'entrée/sortie pour l'air de suralimentation.

Un tel échangeur présente, cependant, des difficultés, notamment, en terme de résistance à la pression.

L'invention vise à améliorer la situation en proposant un échangeur qui, notamment, permet d'améliorer la résistance à la pression, tout en offrant une solution à la fixation des boîtiers d'entrée/sortie pour l'air de suralimentation.

A cet effet, elle propose un échangeur avec les caractéristiques de la revendication 1.

Ainsi, grâce à la présente invention, on constitue un boîtier robuste pouvant facilement accueillir des boîtiers d'entrée/sortie pour l'air de suralimentation.

Les caractéristiques de l'invention sont montrées dans les exemples issus des figures sur les dessins annexés dans lesquels :
La figure 1 représente une vue partiellement assemblée de l'échangeur de chaleur selon la présente invention.
La figure 2 représente une vue éclatée, simplifiée, de l'échangeur de chaleur selon la présente invention.
La figure 3 représente un mode de réalisation de l'invention, dans lequel le boîtier de sortie de l'air de suralimentation est un répartiteur d'air d'admission pour le moteur.

L'invention concerne un échangeur de chaleur 10 comportant un faisceau 12 d'échange de chaleur et un boîtier 14 à l'intérieur duquel est logé le faisceau 12 d'échange de chaleur.

Le faisceau d'échange de chaleur est réalisé, de façon connue de l'homme du métier, par empilement de plaques 16 et d'intercalaires ondulés (non représentés). Le faisceau 12 comporte une entrée et une sortie pour l'air de suralimentation.

Les plaques 16 pourront être, par exemple, des plaques embouties comportant deux bossages munis d'ouvertures. Les plaques 16 sont disposées par paires et les bossages respectifs d'une plaque appartenant à une paire sont en communication avec les bossages respectifs d'une plaque voisine appartenant à une paire de plaques voisines. Ceci permet d'établir une communication de fluide, ici du liquide caloporteur, entre les paires de plaques respectives.

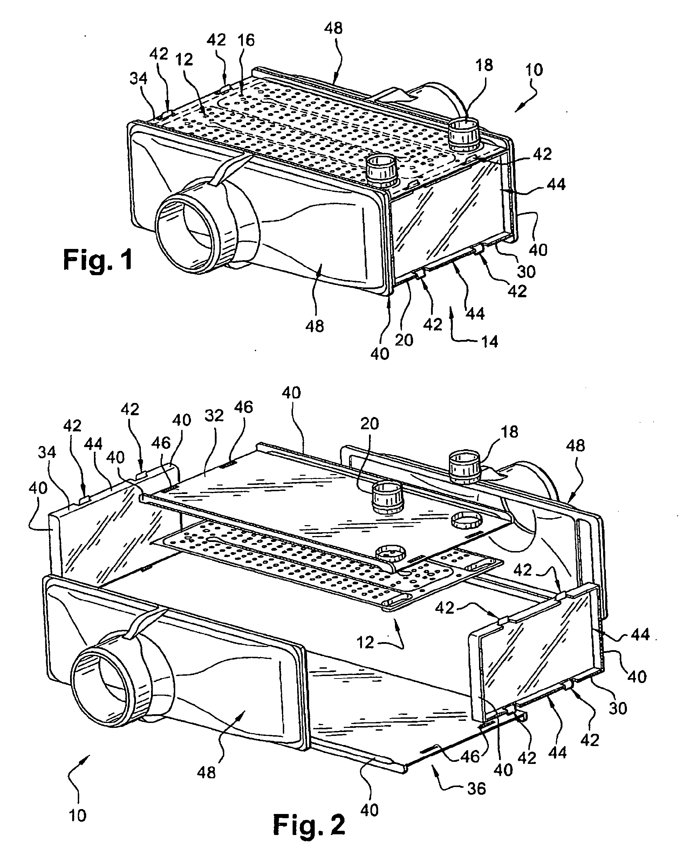

La figure 1 représente un échangeur de chaleur dont on a enlevé une partie supérieure du boîtier dans le but de faire apparaître la structure d'une plaque 16 du faisceau 12 d'échange de chaleur.

Dans cet exemple de réalisation, la plaque 16 comporte une série de premiers emboutis dits jointifs permettant la définition de canaux et de retours pour la circulation en passes du fluide caloporteur. Ici, la plaque 16 comporte quatre canaux et trois retours permettant la définition de quatre passes de circulation pour le liquide caloporteur.

La plaque 16 comporte en outre une seconde série d'emboutis, moins profond que la première série d'emboutis décrite plus haut. Cette seconde série d'emboutis est placée dans les différentes passes de circulation du liquide caloporteur. Ces emboutis sont aptes à perturber la circulation du liquide caloporteur améliorant ainsi l'échange de chaleur entre ce dernier de l'air de suralimentation.

Le faisceau d'échange de chaleur 10 comporte en outre des intercalaires ondulés (non visible sur les figures 1 et 2) disposés à chaque fois entre des paires de plaques voisines et brasés aux plaques 16. L'air de suralimentation circule entre chaque paire de plaque à travers les intercalaires ondulés.

Autrement dit, le faisceau 12 délimite des premiers canaux pour le gaz à refroidir, dans lesquels sont présents les intercalaires ondulés, et des seconds canaux pour la circulation du liquide caloporteur. Dans le mode de réalisation proposé, le liquide caloporteur pourra être du liquide de refroidissement moteur, c'est-à-dire de l'eau additionnée de glycol, provenant, par exemple d'un circuit dit basse température du véhicule automobile.

L'air de suralimentation est, ainsi, refroidi par le liquide de refroidissement qui pénètre dans le faisceau 12, par exemple, par une tubulure d'entrée 18, circule dans les seconds canaux du faisceau pour échanger de la chaleur avec l'air de suralimentation à refroidir et quitte ensuite le faisceau, par exemple, par la tubulure de sortie 20.

Le faisceau 12 d'échange de chaleur est logé à l'intérieur d'un boîtier 14 et est brasé à ce dernier. Dans les exemples représentés aux figures 1 à 3, le boîtier 14 comporte un corps présentant au moins une face ouverte. Le boîtier 14 pourra être métallique et notamment en aluminium ou en alliage d'aluminium.

Dans les modes de réalisation illustrés dans la présente demande, les boîtiers 14 comportent deux faces ouvertes situées en vis-à-vis l'une de l'autre. Ces faces ouvertes se trouvent en vis-à-vis de l'entrée et de la sortie pour l'air de suralimentation du faisceau 12 d'échange de chaleur.

Une telle configuration permet au corps de définir un cadre autour de la ou des face(s) ouverte(s).

Le corps du boîtier 14 est formé par au moins une première et une deuxième parties assemblées entre elles par brasage. Dans le mode de réalisation illustré aux figures 1 et 2, le corps du boîtier présente quatre parties distinctes 30 ; 32 ; 34 et 36 visibles de manière plus distincte au niveau de la figure 2. Dans cette vue éclatée de l'échangeur de chaleur, une seule plaque 16 du faisceau d'échange de chaleur a été représentée dans un souci de simplification.

Ici, les quatre parties 30 ; 32 ; 34 et 36 sont réalisés sous la forme de quatre plaques sensiblement rectangulaires.

Autrement dit, le boîtier 14 présente une forme parallélépipédique comportant quatre faces pleines dont : une face dite de fond 36, une face dite supérieure 32, deux faces dites latérales 30 et 34 et deux faces ouvertes situées en vis-à-vis l'une de l'autre. Ces faces ouvertes permettent la circulation de l'air de suralimentation dans le faisceau d'échange de chaleur 12.

Le boîtier 14 comporte deux tubulures 18 et 20 pour l'entrée et la sortie, dans l'échangeur 10 d'un fluide caloporteur. Les tubulures 18 et 20 sont prévues au niveau de l'une desdites parties 30 ; 32 ; 34 ; 36 du boîtier 14. Ici, les tubulures 18 et 20 sont situées sur la face supérieure 32.

Ici, la face de fond 36 et la face supérieure 32 et les deux faces latérales 30 et 34 sont respectivement situées en vis-à-vis l'une de l'autre.

L'une au moins des parties formant le boîtier 14 est en contact avec une extrémité de chacune des plaques 16 de l'empilement de plaques du faisceau 12 d'échange de chaleur.

Dans le mode de réalisation illustré aux figures 1 et 2, il s'agit d'une partie appelée deuxième partie qui est en contact avec une extrémité de chacune des plaques 16, la deuxième partie étant réalisé, ici, sous la forme d'au moins une des faces latérales 30 ou 34.

En d'autres termes, la première partie du boîtier 14 est réalisée sous la forme de la face supérieure 32 et/ou de la face de fond 36. La deuxième partie du boîtier 14, quant à elle, comporte au moins une des deux faces latérales 30 ou 34 voire les deux.

Ici, les deux faces latérales 30 et 34 sont situées en vis-à-vis l'une de l'autre et de part et d'autre de la face ouverte du boîtier 14. Elles sont toutes deux en contact avec l'ensemble des plaques 16 forment l'empilement de plaques du faisceau d'échange de chaleur 12, chacune des faces latérales étant en contact avec une extrémité desdites plaques 16.

Cette caractéristique permet notamment à l'échangeur de chaleur d'être encore plus résistant aux différentes contraintes mécaniques que subit l'échangeur de chaleur lors de son utilisation dans un véhicule automobile et notamment la tenue à la pression.

Lors du brasage des différents éléments de l'échangeur de chaleur, les faces latérales 30 et 34 servent de butée d'arrêt pour la partie supérieure 32. Ces pièces latérales 30 et 34 permettent en outre de garantir la géométrie globalement parallélépipédique du boîtier 14 de l'échangeur de chaleur 10.

En effet, le faisceau 12 d'échange de chaleur est composé, comme expliqué plus haut de plaques 16 et d'intercalaires. Lors du brasage, ces différents éléments perdent de la hauteur, car elles contiennent à leur surface un placage de brasage qui fond pendant l'opération de brasage. Ce phénomène de perte de hauteur entre produit assemblé et produit brasé est aussi connu sous le nom de « foisonnement » produit.

Dans le mode de réalisation représenté, ici, les faces latérales 30 et 34 sont en contact avec les petits cotés desdites plaques 16. On appelle « petits cotés », les cotés des plaques 16 situés en vis-à-vis l'un de l'autre dont l'un comporte, dans ce mode de réalisation les bossages.

Un mode de réalisation non illustré propose que la deuxième partie du boîtier 14 comporte une forme en U et que la première partie du boîtier 14 forme un couvercle pour la deuxième partie. Autrement dit, il est possible de prévoir un corps de boîtier en deux parties, à savoir une partie en forme de U (dite deuxième partie) comportant une face de fond et deux faces latérales formant les ailes du U et une autre partie, par exemple plane, fermant le volume de la deuxième partie.

Il est en outre prévu, que la première partie du boîtier 14 présente un degré de liberté par rapport à la deuxième partie du boîtier 14 dans le sens de l'empilement des plaques 16 du faisceau d'échange de chaleur 12.

Dans les exemples de réalisation illustrés aux figures 1 et 2, ce degré de liberté est obtenu par la coopération d'au moins une languette 42 située sur la deuxième partie du boîtier 14 avec un évidement ou poinçonnage 46 situé sur la première partie du boîtier 14.

En effet, les languettes 42 permettent, lors de l'opération de brasage, à la face de fond 36 et à la face supérieure 32 de coulisser par rapport au pièces latérales 30 et 34 et d'accompagner ainsi la perte de hauteur du faisceau 12 d'échange de chaleur, cette perte étant, pour rappel, due au phénomène de foisonnement.

La languette 42 et l'évidement 46 sont ainsi des moyens d'assemblage mutuels agencés de manière à gérer/contrôler le foisonnement de l'échangeur de chaleur 10.

En outre, ces moyens d'assemblage présentent aussi l'avantage d'être des moyens d'auto-centrage de la première partie du boîtier 14 sur la deuxième partie du boîtier 14.

En effet, les languettes 42 des faces latérales 30 et 34 sont en appuis à l'extérieur des évidements 46 de la face supérieure 32 et de la face de fond 36. Ceci présente l'avantage de ne pas devoir appuyer latéralement sur les faces latérales 30 et 34 pendant le brasage. Ainsi, seul un effort vertical est exercé sur la face supérieure 32 et de la face de fond 36 pendant le brasage, ce qui permet au bottier de s'auto-centrer.

Les languettes 42 s'étendent, ici, selon sensiblement la même direction que celui de l'empilement des plaques du faisceau 12 d'échange de chaleur.

Comme mieux visible sur la figure 2, chacune des faces latérales 30 et 34 comporte deux languettes 42 sur chaque coté des faces latérales 30 et 34 en contact respectivement avec la face supérieure 32 et la face de fond 36.

Autrement dit, dans cet exemple, chaque deuxième partie du boîtier 14 ou, ici, face latérale 30 ou 34 comporte, sur deux de ces cotés situés en vis-à-vis l'un de l'autre,deux pattes 42 aptes à coopérer avec un évidemment 46 situé en vis-à-vis de ces pattes 42 sur la première partie du boîtier 14, ou, ici, face supérieure 32 et face de fond 36.

Dans le mode de réalisation illustré, chaque face latérale 30 et 34 comporte en outre au moins un bord relevé 44, dit premier bord relevé 44 ou encore bord d'assemblage du boîtier. Le premier bord relevé 44, s'étend ici sensiblement à angle droit par rapport au plan d'extension général de la face latérale sur lequel il est formé.

Ce premier bord relevé ou bord d'assemblage du boîtier 44 est formé par repliement de matière de chaque face latérale 30 ou 34.

Ici, le premier bord relevé 44 est aménagé sur les parties des faces latérales 30 et 34 en contact respectivement avec la face supérieure 32 et la face de fond 36.

Dans ce mode de réalisation, les languettes 42 sont obtenues par découpe et pliage du premier bord relevé 44.

Autrement dit, la deuxième partie du boîtier 14 comporte au moins un premier bord relevé 44 muni d'une languette 42 et la languette 42 est apte à coopérer avec un évidement 46 de la première partie. Le premier bord relevé 44 ou bord d'assemblage du boîtier collabore donc à l'assemblage des différents éléments du boîtier 14.

Encore autrement dit, chaque partie 30 ; 32 ; 34 et 36 formant le boîtier 14 comporte au moins un moyen d'assemblage 42 ; 46 et/ ou 44 apte à coopérer avec la partie adjacente de manière à assembler le boîtier 14.

Ainsi et grâce à la coopération entre le premier bord relevé 44, la languette 42 et l'évidement 46, le brasage des faces latérales sur la face supérieure 32 et la face de fond 36 permet d'obtenir une étanchéité renforcée du boîtier 14 en diminuant ainsi le risque de fuite d'air de suralimentation.

Grâce à la configuration de l'échangeur de chaleur 10, il est possible de réaliser, en une seule étape, lors de l'opération de brasage, l'assemblage de l'ensemble des éléments composant le faisceau 12 d'échange de chaleur avec ceux composant le boîtier 14.

L'échangeur de chaleur 10 présente la caractéristique selon laquelle au moins deux parties contiguës du corps du boîtier 14 comportent des moyens pour créer une surface d'appui pour un collecteur 48. On entend ici par collecteur aussi bien un couvercle qu'un répartiteur d'air d'admission pour le moteur.

Dans le mode de réalisation illustré aux figures 1 et 2, chaque collecteur 48 est un couvercle d'entrée ou de sortie pour l'air de suralimentation. Ces collecteurs 48 sont munis respectivement d'une tubulure d'entrée de gaz et d'au moins une tubulure de sortie de gaz.

Dans le mode de réalisation représenté aux figures 1 et 2, chacune des quatre parties 30 ; 32 ; 34 et 36 formant le boîtier 14 comporte des moyens 40 pour créer une surface d'appui pour un collecteur et ceci pour chaque face ouverte du boîtier. En d'autres termes, chacune des faces ouvertes du corps du boîtier 14 est bordée au moins en partie par les moyens 40 pour créer une surface d'appui pour un collecteur 48.

Autrement dit, ici, le corps du boîtier est formé par au moins deux parties assemblées entre elles par brasage et au moins deux desdites parties sont prévues contiguës et comportent des moyens 40 pour créer une surface d'appui pour un collecteur 48.

Les moyens 40 pour créer la surface d'appui pour le collecteur 48 servent donc d'interface entre le corps du boîtier 14 et le ou les collecteurs 48.

Ici, les moyens pour créer une surface d'appui sont des seconds bords relevés 40 qu'on pourra aussi dénommés bord d'assemblage collecteur.

Ainsi, grâce à ces moyens 40 pour créer une surface d'appui pour un collecteur, il n'est plus nécessaire de rapporter des pièces supplémentaires de liaison sur le faisceau d'échange de chaleur pour former les boîtiers d'entrée/sortie de l'air de suralimentation.

Les moyens 40 pour créer une surface d'appui sont, ici, constitués de bords relevés 40 ou bord d'assemblage collecteur 40.

Les seconds bords relevés 40 d'une partie 30 ; 32 ; 34 ou 36 s'étendent de manière sensiblement perpendiculaire par rapport au plan d'extension général de ladite partie.

Autrement dit, dans ce mode de réalisation, les parties 30 ; 32 ; 34 ; 36 du corps du boîtier 14 sont chacune constitués d'une plaque munie, sur au moins une partie de sa périphérie de moyens 40 pour créer une surface d'appui, ces moyens étant, ici constitués de bords relevés dits bord d'assemblage collecteur 40.

Ici, chaque partie 30 ; 32 ; 34 ou 36 comporte au moins un second bord relevé en contact avec le second bord relevé de la partie contiguë au niveau d'une de ses extrémités de manière à définir la surface d'appui sur toute la périphérie de la face ouverte du corps du boîtier. La surface d'appui formée par les seconds bords relevés 40 est, ici, plane.

Cette surface plane a pour but de créer une face d'appui « continue » qui pourra servir au soudage d'un collecteur ou d'une bride ayant un pourtour également plat de sorte à obtenir une soudure étanche.

Autrement dit, dans le mode de réalisation de la figure 1, le second bord relevé de la partie 36 (ou face de fond) est en contact, à la fois, avec le second bord relevé de la partie 30 (ou face latérale 30) et avec le second bord relevé de la partie 34 (ou face latérale 34).

De même, le second bord relevé de la partie 32 (ou face supérieure) est en contact, à la fois, avec le second bord relevé de la partie 30 (ou face latérale 30) et avec le second bord relevé de la partie 34 (ou face latérale 34).

En d'autres termes, le cadre entourant une face ouverte du corps du boîtier 14 comporte une série de seconds bords relevés sur tout son pourtour, chaque second bord relevé 40 ou bord d'assemblage collecteur 40 étant en contact à chacune de ses extrémités avec un autre second bord relevé 40.

Encore autrement dit, les seconds bords relevés forment une bordure autour du cadre entourant la face ouverte du corps du boîtier 14. Cette bordure sert d'interface entre le boîtier 14 et le collecteur 48.

Dans ces exemples, les seconds bords relevés 40 sont reliés par un joint de brasure.

Les faces latérales 30 et 34 peuvent donc être vues comme des plaques de forme sensiblement rectangulaire comportant un pourtour ou périmètre bordé par deux séries de bords relevés, ces bords relevés étant composés de deux premiers 44 et de deux seconds 40 bords relevés, chacun des membres des différentes catégories de bords relevés étant situés en vis-à-vis du membre de même catégorie de bords relevés. Les premiers bords relevés 44 ayant pour fonction d'intervenir pour l'assemblage du boîtier 14 et les seconds bord relevés 40 servant à l'assemblage d'un collecteur 48 sur le corps du boîtier 14.

Autrement dit, au moins une des parties 30 ; 32 ; 34 ou 36 du boîtier 14 comporte un pourtour bordé par des bords relevés, ces bords relevés étant composés, ici, de deux premiers 44 et de deux seconds 40 bords relevés, les premiers bords relevés 44 intervenant dans l'assemblage du boîtier 14 et les seconds bord relevés 40 intervenant dans l'assemblage d'un collecteur 48 sur le boîtier 14.

Encore autrement dit, les faces latérales 30 et 34 sont entourées, ici sur toute leur périphérie, d'une nervure formée par les premiers bords relevés 44 et par les seconds bords relevés 40. Cette nervure participe à la résistance mécanique de l'échangeur de chaleur 10.

L'assemblage du ou des collecteurs 48 sur le boîtier 14 se fait, par exemple par soudage du ou des collecteurs sur la bordure formée par les seconds bords relevés 40 autour du cadre entourant la face ouverte du corps du boîtier 14.

Les collecteurs pourront par exemple être des boîtiers en aluminium, de préférence obtenus par le procédé de moulage sous pression.

Un mode de réalisation de l'invention propose, en outre, qu'au moins une des parties 30 ; 32 ; 34 ou 36 comporte des déformations locales aptes à réduire les jeux de brasage avec une autre partie 30 ; 32 ; 34 ou 36, cette autre partie étant contiguë à la parties 30 ; 32 ; 34 ou 36 comportant des déformations locales.

Ici, chaque partie 30 ; 32 ; 34 et 36 comporte des déformations locales aptes à réduire les jeux de brasage entre les différentes parties du boîtier et ainsi améliorer la continuité de la surface plane formant interface avec le collecteur.

Selon un autre mode de réalisation, la face supérieure 32 et la face de fond 36 ont une largeur légèrement supérieure à celle des plaques du faisceau d'échange de chaleur. De cette manière, on éloigne la zone de soudage du collecteur des zones brasées.

On entend ici par largeur la distance séparant deux cotés, soit de la face supérieure 32 ou de fond 36, soit d'une plaque 16, dans le sens de circulation de l'air de suralimentation dans l'échangeur de chaleur. Autrement dit, dans la direction des petits cotés des plaques 16.

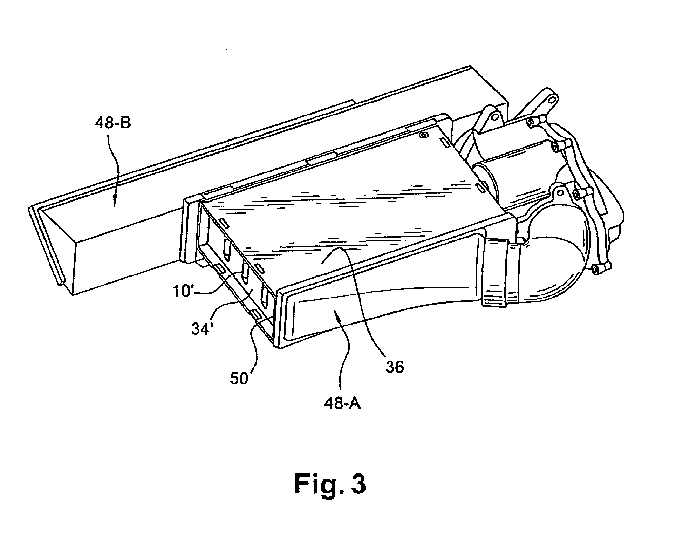

La figure 3 propose un mode de réalisation de l'invention, dans lequel le collecteur de sortie de l'air de suralimentation est réalisé sous la forme d'un répartiteur d'air d'admission 48-B pour le moteur.

Un répartiteur d'air d'admission pour le moteur permet une communication, par l'intermédiaire d'orifices, avec au moins une partie des conduits d'admission des chambres d'admission du moteur.

Encore autrement dit, ce répartiteur sert d'interface entre l'échangeur de chaleur et la culasse du moteur sur lequel l'échangeur de chaleur 10' est monté.

Ce répartiteur est aussi connu sous sa dénomination anglaise « intake manifold ». Il est fixé à la culasse de la chambre de combustion.

Dans ce mode de réalisation, l'entrée de l'air de suralimentation dans l'échangeur de chaleur se fait par l'intermédiaire d'un boîtier d'entrée 48-A, le boîtier est ici réalisé sous la forme d'un couvercle. La sortie de l'air de suralimentation de l'échangeur de chaleur 10' se fait, quant à elle, par l'intermédiaire d'un répartiteur 48-B qui fait, ici, office de boîtier de sortie pour l'air de suralimentation.

Les faces latérales 34' du boîtier de l'échangeur de chaleur comporte, dans ce mode de réalisation, des nervures 50 de renfort, ici, au nombre de trois.

## Revendications

1. Echangeur de chaleur (10) comportant un faisceau (12) d'échange de chaleur et un boîtier (14) à l'intérieur duquel est logé ledit faisceau (12) d'échange de chaleur, ledit boîtier (14) comportant un corps présentant au moins une face ouverte, ledit corps définissant un cadre autour de ladite face ouverte, ledit corps étant formé par au moins deux parties (30 ; 32 ; 34 ; 36) assemblées entre elles par brasage, au moins deux desdites parties étant prévues contiguës comportant des moyens (40) pour créer une surface d'appui pour un collecteur (48), lesdites parties (30 ; 32 ; 34 ; 36) dudit corps étant chacune constitués d'une plaque munie sur au moins une partie de sa périphérie desdits lesdits moyens (40) pour créer une surface d'appui, **caractérisé en ce que** lesdits moyens (40) pour créer une surface d'appui étant constitués de bords relevés (40) dits bord d'assemblage collecteur (40) et **en ce que** lesdits moyens (40) pour créer une surface d'appui sont des bords relevés (40) s'étendant de manière sensiblement perpendiculaire par rapport au plan d'extension général de ladite plaque formant l'une desdites parties (30 ; 32 ; 34 ; 36).

2. Echangeur selon la revendication 1, ledit boîtier (14) comporte quatre parties (30 ; 32 ; 34 ; 36).

3. Echangeur selon la revendication 1 ou 2, dans lequel ledit bord d'assemblage collecteur (40) est en contact avec le bord d'assemblage collecteur (40) de la partie contiguë (30 ; 32 ; 34 ; 36) au niveau d'une de ses extrémités de manière à définir ladite surface d'appui sur toute la périphérie de la face ouverte dudit corps du boîtier (14).

4. Echangeur selon la revendication 2 ou 3, dans lequel lesdits bords d'assemblage collecteur (40) sont reliés par un joint de brasure.

5. Echangeur de chaleur selon l'une des revendications précédentes, dans lequel au moins une desdites parties (30 ; 32 ; 34 et 36) comporte des déformations locales aptes à réduire les jeux de brasage avec une partie contiguë (30 ; 32 ; 34 et 36) dudit boîtier (14).

6. Echangeur de chaleur selon l'une des revendications précédentes, dans lequel au moins une des parties (30 ; 34) du boîtier (14) comporte un pourtour bordé par des bords relevés, ces bords relevés étant composés de premiers (44) et de seconds (40) bords relevés, les premiers bords relevés (44) intervenant dans l'assemblage du boîtier (14) et les seconds bord relevés (40) intervenant dans l'assemblage d'un collecteur (48) sur le boîtier (14).

7. Echangeur de chaleur selon l'une des revendications précédentes, dans lequel ledit corps comporte deux faces ouvertes situées en vis-à-vis l'une de l'autre.

8. Echangeur selon l'une des revendications précédentes, dans lequel ledit boîtier comporte deux tubulures (18 ; 20) pour l'entrée et la sortie, dans ledit échangeur (10), d'un fluide caloporteur, prévues au niveau de l'une desdites parties (30 ; 32 ; 34 ; 36) du boîtier (14).

9. Echangeur de chaleur selon la revendication 8, dans lequel ledit faisceau (12) d'échange de chaleur détermine des premiers canaux pour la circulation d'un gaz et des seconds canaux pour la circulation du fluide caloporteur.

10. Echangeur de chaleur selon l'une des revendications précédentes, dans lequel ledit faisceau (12) d'échange de chaleur comporte un empilement de plaques (16).

11. Echangeur de chaleur selon l'une des revendications précédentes, dans lequel chaque dite partie (30 ; 32 ; 34 ; 36) du boîtier (14) comporte un moyen d'assemblage (42 ; 46) apte à coopérer avec la partie adjacente de manière à assembler ledit boîtier (14).

12. Echangeur de chaleur selon la revendication précédente, dans lequel ledit moyen d'assemblage est une languette (42) et/ou un évidement (46).

## Claims

1. Heat exchanger (10) comprising a heat exchange core (12) and a housing (14), inside which said heat exchange core (12) is housed, said housing (14) comprising a body having at least one open face, said body defining a frame around said open face, said body being formed by at least two parts (30; 32; 34; 36), which are assembled together by brazing, at least two of said parts being provided adjacent to one another comprising means (40) for creating a support surface for a manifold (48), said parts (30; 32; 34; 36) of said body each consisting of a plate provided, on at least a part of its periphery, with said means (40) for creating a support surface, **characterized in that** said means (40) for creating a support surface consist of raised edges (40) known as manifold assembling edges (40), and **in that** said means (40) for creating a support surface are raised edges (40) extending approximately perpendicularly with respect to the general plane of extension of said plate forming one of said parts (30; 32; 34; 36).

2. Exchanger according to Claim 1, wherein said housing (14) comprises four parts (30; 32; 34; 36).

3. Exchanger according to Claim 1 or 2, wherein said manifold assembling edge (40) is in contact with the manifold assembling edge (40) of the adjacent part (30; 32; 34; 36) at one of its ends, so as to define said support surface over the entire periphery of the open face of said body of the housing (14).

4. Exchanger according to Claim 2 or 3, wherein said manifold assembling edges (40) are connected by a brazed joint.

5. Heat exchanger according to one of the preceding claims, wherein at least one of said parts (30; 32; 34 and 36) comprises local deformations able to reduce the brazing clearances with an adjacent part (30; 32; 34 and 36) of said housing (14).

6. Heat exchanger according to one of the preceding claims, wherein at least one of the parts (30; 34) of the housing (14) comprises a perimeter bordered by raised edges, these raised edges being composed of first (44) and second (40) raised edges, the first raised edges (44) being involved in the assembling of the housing (14) and the second raised edges (40) being involved in the assembling of a manifold (48) on the housing (14).

7. Heat exchanger according to one of the preceding claims, wherein said body comprises two open faces located opposite one another.

8. Exchanger according to one of the preceding claims, wherein said housing comprises two tubes (18; 20), provided at one of said parts (30; 32; 34; 36) of the housing (14), for the inlet and outlet, in said exchanger (10), of a heat transfer fluid.

9. Heat exchanger according to Claim 8, wherein said heat exchange core (12) determines first channels for a gas to flow through and second channels for the heat transfer fluid to flow through.

10. Heat exchanger according to one of the preceding claims, wherein said heat exchange core (12) comprises a stack of plates (16).

11. Heat exchanger according to one of the preceding claims, wherein each of said parts (30; 32; 34; 36) of the housing (14) comprises an assembling means (42; 46) able to engage with the adjacent part so as to assemble said housing (14).

12. Heat exchanger according to the preceding claim, wherein said assembling means is a tab (42) and/or a recess (46).

## Patentansprüche

**1.** Wärmetauscher (10), der ein Wärmetauscherbündel (12) und ein Gehäuse (14) aufweist, in dessen Innerem das Wärmetauscherbündel (12) untergebracht ist, wobei das Gehäuse (14) einen Körper aufweist, der mindestens eine offene Seite hat, wobei der Körper einen Rahmen um die offene Seite definiert, wobei der Körper von mindestens zwei Teilen (30; 32; 34; 36) geformt wird, die durch Löten zusammengefügt werden, wobei mindestens zwei aneinandergrenzend vorgesehene der Teile Einrichtungen (40) aufweisen, um eine Auflagefläche für einen Kollektor (48) zu erzeugen, wobei die Teile (30; 32; 34; 36) des Körpers je aus einer Platte bestehen, die auf mindestens einem Teil ihres Umfangs mit den Einrichtungen (40) zum Erzeugen einer Auflagefläche versehen ist, **dadurch gekennzeichnet, dass** die Einrichtungen (40) zum Erzeugen einer Auflagefläche aus hochstehenden Rändern (40) bestehen, Kollektor-Montageränder (40) genannt, und dass die Einrichtungen (40) zum Erzeugen einer Auflagefläche hochstehende Ränder (40) sind, die sich im Wesentlichen lotrecht zur allgemeinen Ausdehnungsebene der Platte erstrecken, die einen der Teile (30; 32; 34; 36) bildet.

**2.** Tauscher nach Anspruch 1, bei dem das Gehäuse (14) vier Teile (30; 32; 34; 36) aufweist.

**3.** Tauscher nach Anspruch 1 oder 2, bei dem der Kollektormontagerand (40) mit dem Kollektormontagerand (40) des angrenzenden Teils (30; 32; 34; 36) im Bereich eines seiner Enden in Kontakt ist, um die Auflagefläche über den ganzen Umfang der offenen Seite des Körpers des Gehäuses (14) zu definieren.

**4.** Tauscher nach Anspruch 2 oder 3, bei dem die Kollektormontageränder (40) durch eine Lötnaht verbunden sind.

**5.** Wärmetauscher nach einem der vorhergehenden Ansprüche, bei dem mindestens einer der Teile (30; 32; 34 und 36) lokale Verformungen aufweist, die die Lötspielräume mit einem angrenzenden Teil (30; 32; 34 und 36) des Gehäuses (14) verringern können.

**6.** Wärmetauscher nach einem der vorhergehenden Ansprüche, bei dem mindestens einer der Teile (30; 34) des Gehäuses (14) einen von hochstehenden Rändern umgebenen Umriss aufweist, wobei diese hochstehenden Ränder aus ersten (44) und zweiten (40) hochstehenden Rändern bestehen, wobei die ersten hochstehenden Ränder (44) bei der Montage des Gehäuse (14) mitwirken und die zweiten hochstehenden Ränder (40) bei der Montage eines Kollektors (48) auf das Gehäuse (14) mitwirken.

**7.** Wärmetauscher nach einem der vorhergehenden Ansprüche, bei dem der Körper zwei einander gegenüber angeordnete offene Seiten aufweist.

**8.** Tauscher nach einem der vorhergehenden Ansprüche, bei dem das Gehäuse zwei Anschlussstutzen (18; 20) im Tauscher (10) für den Einlass und den Auslass eines Wärmeträgerfluids aufweist, die im Bereich eines der Teile (30; 32; 34; 36) des Gehäuses (14) vorgesehen sind.

**9.** Wärmetauscher nach Anspruch 8, bei dem das Wärmetauscherbündel (12) erste Kanäle für den Kreislauf eines Gases und zweite Kanäle für den Kreislaufs des Wärmeträgerfluids bestimmt.

**10.** Wärmetauscher nach einem der vorhergehenden Ansprüche, bei dem das Wärmetauscherbündel (12) einen Stapel von Platten (16) aufweist.

**11.** Wärmetauscher nach einem der vorhergehenden Ansprüche, bei dem jeder Teil (30; 32; 34; 36) des Gehäuses (14) eine Montageeinrichtung (42; 46) aufweist, die mit dem benachbarten Teil zusammenwirken kann, um das Gehäuse (14) zu montieren.

**12.** Wärmetauscher nach dem vorhergehenden Anspruch, bei dem die Montageeinrichtung eine Zunge (42) und/oder eine Aussparung (46) ist.
